# EUROPÄISCHE PATENTSCHRIFT

(11) **EP 2 424 795 B1**
(45) Veröffentlichungstag und Bekanntmachung des Hinweises auf die Patenterteilung: **28.05.2014**
(21) Anmeldenummer: 10711155.1
(22) Anmeldetag: 26.03.2010
(51) Int. Cl.: B65G 21/20, B65G 29/00

(54) **WERKZEUGLOSER AUSTAUSCH VON FLASCHENFÜHRUNGSKURVEN**
TOOL-FREE REPLACEMENT OF BOTTLE GUIDE CURVES
PERMUTATION, SANS OUTIL, DE DISPOSITIFS CURVILIGNES DE GUIDAGE DE BOUTEILLES

(30) Priorität: 27.04.2009 DE 102009018731
(43) Veröffentlichungstag der Anmeldung: 07.03.2012
(73) Patentinhaber: KHS GmbH, 44143 Dortmund (DE)
(72) Erfinder: SÜTHER, Werner, 55452 Windesheim (DE)
(86) Internationale Anmeldenummer: PCT/EP2010/001902
(87) Internationale Veröffentlichungsnummer: WO 2010/124770

(56) Entgegenhaltungen:
- WO-A1-97/45347
- DE-A1- 4 010 990
- DE-A1- 19 539 694
- US-A- 5 732 528
- US-A- 5 784 857

## Beschreibung

Die Erfindung betrifft ein Führungselement, das Führungsteilelemente aufweist, welche über zumindest ein Verbindungselement miteinander verbindbar sind.

Derartige Führungselemente sind zum Beispiel in Flachenbehandlungsmaschinen einsetzbar, und werden im Folgenden als Flaschenführungskurven bzw. - sterne bezeichnet. Flaschenbehandlungsmaschinen können Befüller, Verschließer, Etikettierer oder dergleichen aufweisen, welche zum Beispiel rotierend Flaschen transportieren. Die Flaschenführungskurven weisen Führungsteilelemente, also zum Beispiel ein Halsführungselement und ein auswechselbares Element auf. Das Halsführungselement kann auch als Halsführungskurve bzw. -stern und das auswechselbare Element als wechselbare Führung bzw. Sternplatte bezeichnet werden. Die Führungselemente werden als Gruppe auch häufig als "Formatteile" bezeichnet, da sie abhängig von dem Flaschenformat vorgesehen werden müssen.

Die Flaschenführungskurven sind jeweils an bestimmte Flaschendurchmesser und - höhen angepasst ausgeführt. Um einen bestimmten Abstand, welcher der jeweils zu behandelnden Flasche bzw. Flaschenserie entsprechend angepasst ist, des einen Führungsteilelementes zu dem anderen Führungsteilelement zu gewährleisten, ist das zumindest eine bzw. mehrere Verbindungselemente vorgesehen. Die Verbindungselemente sind zum einen mit dem Halsführungselement und zum anderen mit der wechselbaren Sternplatte verbunden. Hierzu ist üblicherweise jeweils eine Schraubverbindung vorgesehen, was bedeutet, dass die einander beabstandeten Führungsteilelemente formschlüssig über die Verbindungselemente miteinander verbunden sind.

Mit einer Flaschenbehandlungsmaschine können mehrere Flaschen behandelt werden, welche unterschiedliche Höhen oder z.B. in ihrem Bauchbereich auch unterschiedliche Durchmesser aufweisen können. Selbstverständlich durchlaufen die Flaschenbehandlungsmaschinen üblicherweise Flaschenserien mit gleichen Abmessungen. Bei einem Wechsel auf eine neue Flaschenserie mit den genannten unterschiedlichen Abmessungen müssen die Flaschenführungsteilelemente an die neuen Abmessungen angepasst werden. Dies geschieht üblicherweise mit einem Austausch der jeweiligen Führungsteilelemente, bevorzugt der wechselbaren Sternplatte.

Diese ist jedoch, wie oben beschrieben, über die Verbindungselemente formschlüssig mit dem Halsführungselement verbunden, also verschraubt. Zum Austausch müssen daher die jeweiligen Schraubverbindungen gelöst werden, wozu derzeit ein Werkzeugeinsatz notwendig ist. Das Lösen jeder einzelnen Schraubverbindung ist sehr zeitintensiv, und wirkt sich somit nachteilig auf die Verfügbarkeit der Flaschenbehandlungsmaschine aus. Zudem muss die vorhandene, wechselbare Sternplatte durch eine an die neuen Abmessungen der Flaschenserie angepasste, wechselbare Sternplatte ausgetauscht werden, so dass wiederum der erhebliche Zeitaufwand zum Herstellen der Schraubverbindungen anfallt. Insofern ist ein erheblicher Zeitaufwand zur Umrüstung notwendig, welcher nicht nur enorme Personalkosten bewirkt, sondern auch die Flaschenbehandlungsmaschine stillsetzt, so dass die Produktion z.B. das Abfüllen oder das Etikettieren und alle vor oder nachgeschalteten Schritte unterbrochen sind.

Aus der gattungsgemässen US 5,732,528 B ist eine verbesserte Ausführungsform bekannt, bel welcher an dem oberen Flaschenführungsteilelement ein stegartiges Element angeordnet ist, welches in ein ringartiges und auf dem unteren Flaschenführungsteilelement befestigtes Verschlusselement einführbar ist. Das obere Flaschenführungsteilelement kann in unterschiedlichen Höhen mittels eines Arretierdorns fixiert werden, wobei der Arretierdom in eine der mehreren, umlaufenden Nuten des ersten Flaschenführungstellelementes eingeführt werden muss. Weiterhin beschreibt die US 5,784,857 ein selbstpositionierendes Sternradsystem, wobei ein werkzeugloser Austausch des gesamten Sternradsystems möglich sein soll.

Bekannt sind aber auch Ausführungen, in welchen die Verbindungselemente stoffschlüssig jeweils mit den jeweiligen Führungstellelementen verbunden, also verschweißt sind. Ein Austausch ist dann nur so zu bewerkstelligen, dass die gesamte Flaschenführungskurve ausgetauscht werden muss.

Der Erfindung liegt daher die Aufgabe zugrunde, ein Führungselement der eingangs genannten Art anzugeben, welches in einfacher Weise an neue Flaschendimensionen anpassbar ist.

Erfindungsgemäß wird die Aufgabe durch ein Führungselement mit den Merkmalen des Anspruchs 1 gelöst, wobei das zumindest eine Verbindungselement ein erstes Verbindungsteilelement und ein zweites Verbindungsteilelement aufweist, wobei das eine Verbindungsteilelement eine verriegelbare Aufnahme aufweist, in welche das andere Verbindungsteilelement mit seiner an die Aufnahme korrespondierend ausgeführten Steckseite einsteckbar ist, so dass das eine Verbindungsteilelement an dem anderen Verbindungsteilelement kraftschlüssig lagesicher gehalten ist, wenn die verriegelbare Aufnahme verriegelt ist.

Dabei weist eines der Verbindungsteilelemente, das als Halselement ausgeführt ist einen Riegel auf, welcher um eine Drehachse aus einer Entriegelposition in eine Verriegelposition bewegbar ist, wobei der Riegel In einem Schlitz gelagert ist, welcher in dem Halselement sekantenartig eingebracht ist.

Vorteilhaft wird mit der Erfindung ein Führungselement zur Verfügung gestellt, deren Führungsteilelemente, also das Halsführungselement und die wechselbare Sternplatte lediglich durch eine Steckverbindung der beiden Verbindungsteilelemente miteinander verbunden sind, wobei die Lagesicherung kraftschlüssig mittels der verriegelbaren Aufnahme hergestellt wird. Im Unterschied zum Stand der Technik ist zum Auswechseln zum Beispiel der wechselbaren Sternplatte nur noch das Entriegeln der verriegelbaren Aufnahme erforderlich, so dass das in der Aufnahme eingesteckte Verbindungsteilelement einfach aus der Aufnahme herausziehbar ist. Günstiger Weise ist die verriegelbare Aufnahme dabei werkzeuglos betätigbar. Lediglich wenn die verriegelbare Aufnahme verklemmt ist, kann eine Löse- bzw. Schlaghilfe zum unterstützenden Lösen zu Hilfe genommen werden. Zum unterstützenden Lösen reichen aber wenige Schläge, wodurch der Wechselaufwand bzw. Löseaufwand der miteinander kraftschlüssig verbundenen Verbindungsteilelemente nicht sonderlich negativ beeinflusst wird. Grundsätzlich kann die verrlagelbare Aufnahme vorteilhaft manuell werkzeuglos betätigt werden.

In günstiger Ausgestaltung ist vorgesehen, dass das eine Verbindungsteilelement als Halselement an dem Halsführungselement angeordnet ist. wobei das andere Verbindungsteilelement als Fußelement an der wechselbaren Sternplatte angeordnet ist. Zweckmäßig ist, wenn das Halselement die verriegelbare Aufnahme aufweist, wobei das Fußelemente mit seiner Steckseite in die Aufnahme steckbar ist Natürlich kann auch vorgesehen sein, die Steckseite an dem Halselement, und die verriegelbare Aufnahme an dem Fußelement anzuordnen.

Zweckmäßig ist, wenn die beiden Verbindungsteilelemente mit dem jeweiligen Führungselement verbunden sind, was beispielsweise mittels einer Schraubverbindung geschehen kann. Vorteilhaft ist hierbei, dass die, die jeweilige Dimension der Flasche benötigten Führungsteilelemente bereits vormontiert mit den jeweils entsprechenden Verbindungsteilelementen einfach über die Fußelemente in die Halselemente eingesteckt werden müssen, um dann verriegelt zu werden. Bevorzugt wird dabei die wechselbare Sternplatte ausgetauscht, an welcher Fußelemente mit der in Zusammenwirken des Halselementes erforderlichen Höhe angeordnet sind. Das bedeutet, dass in ihrer Höhe jeweils angepasste Fußelemente mit der wechselbaren Sternplatte vormontiert werden können, wobei die Höhe der Halselemente, sofern diese oder das Halsführungselement nicht getauscht werden, vorgegeben ist. Die Vormontage mit den erforderlichen Dimensionen kann vor dem eigentlichen Wechsel erfolgen, so dass Stillstandszeiten auch so verringert werden können.

Zum Einstecken der Steckseite des einen Verbindungsteilelementes in die Aufnahme des anderen Verbindungsteilelementes, ist vorteilhaft vorgesehen, dass das entsprechende Verbindungsteilelement, also zum Beispiel das Halselement in der Art einer Hülse ausgeführt ist.

Die Hülse weist in bevorzugter Ausgestaltung eine stufenartige Bohrung auf, welche durchgängig ausgeführt sein kann. Von einer Fußseite der Hülse ausgehend ist ein zu der Fußseite geöffneter erster Bohrungsabschnitt vorgesehen, welcher im Längsschnitt gesehen bevorzugt zylindrisch ausgeführt ist. Der erste Bohrungsabschnitt geht mit einer Stufe in einen zweiten Bohrungsabschnitt über, welcher bezogen auf den ersten Bohrungsabschnitt einen kleineren Durchmesser aufweist, aber bevorzugt ebenso im Längsschnitt gesehen zylindrisch ausgeführt ist. In dem ersten Bohrungsabschnitt kann eine Einsteckhülse angeordnet sein. Der zweite Bohrungsabschnitt geht über einen kegelförmig ausgeführten Übergangsabschnitt in einen dritten Bohrungsabschnitt über, welcher zum zweiten Bohrungsabschnitt einen geringeren Durchmesser aufweist. Der dritte Bohrungsabschnitt mündet gegenüberliegend zur Fußseite an einer Befestigungsseite. In dem dritten Bohrungsabschnitt kann ein Innengewinde zur Aufnahme einer Befestigungsschraube eingebracht sein. Mit der Befestigungsschraube ist die Hülse z.B. an dem Halsführungselement befestigbar, welches eine entsprechende Öffnung zum durchstecken der Befestigungsschraube aufweist. Zweckmäßig ist, wenn das entsprechende Verbindungsteilelement, also z. B. das Halselement einen Eingreifstutzen aufweist, welcher in diese Öffnung eingreift, wobei der dritte Bohrungsabschnitt in den Eingreifstutzen hineingeführt sein kann. Denkbar ist auch, eine Gewindebohrung in den Eingreifstutzen einzubringen, wobei der dritte Bohrungsabschnitt vor dem Eingreifstutzen enden kann.

In erfindungsgemäßer Ausführung ist im Bereich des zweiten Bohrungsabschnittes ein Schlitz in der Hülsenwand eingebracht. Der Schlitz ist in der Art einer Sekante in der Hülsenwand eingebracht, und öffnet so den zweiten Bohrungsabschnitt.

In dem Schlitz ist ein betätigbarer Riegel angeordnet, welcher über eine Drehachse so in dem Schlitz gelagert ist, dass der Riegel aus einer Entriegelposition in eine Verriegelposition und zurück bewegbar ist. Vorteilhaft ist der Riegel um die Drehachse schwenkbar in die jeweilige Position bewegbar. Der Riegel kann in der Art eines Kreisabschnittes mit einer bezogen auf eine senkrechte Mittelachse der Hülse nach außen gewölbten Innenseite, oder mit einer linear verlaufenden Innenseite ausgeführt sein. Bevorzugt weist der Riegel an seiner Innenseite einen konkaven Mittelbereich auf, an dem jeweils linear ausgeführte Randbereiche angeordnet sind. Befindet sich der Riegel in der Verriegelposition, greift die Innenseite in den zweiten Bohrungsabschnitt so ein, dass der zweite Bohrungsabschnitt von dem Riegel bzw. von seiner Innenseite geschnitten wird.

Um den Riegel in der Verriegelposition zu halten, ist vorteilhaft vorgesehen in der Hülsenwand ein Festlegelement anzuordnen, welches mit seiner Eingreifseite in den Schlitz hineingreift. In dem Riegel ist eine Bohrung eingebracht, in welche das Festlegeelement mit seiner Eingreifseite eingreift. Das Festlegelement kann bevorzugt als Federstift ausgeführt sein, welches an seiner Eingreifseite eine Eingreifkugel aufweist, welche in die Bohrung eingreift, wenn sich der Riegel in der Verriegelposition befindet. Wird der Riegel aus der Entriegel- bzw. Öffnungsposition in die Verriegelposition überführt, drückt dieser die Eingreifkugel entgegen der Federkraft aus seiner entspannten Position. Erreicht der Riegel seine Verriegelposition bewegt sich die Eingreifkugel federkraftbedingt in Richtung ihrer entspannten Position und schlägt bevorzugt gut hörbar im Bereich der Bohrung an dem Riegel an. In dieser Position greift die Eingreifkugel federkraftbedingt etwas in die Bohrung ein, so dass der Riegel hinreichend festgelegt ist. Durch das Anschlaggeräusch wird die Bedienperson gleichzeitig über die korrekte Position des Riegels gewahr. Vorteilhaft ist, wenn benachbart zum Schlitz eine Vertiefung in der Hülsenwand eingebracht ist. Befindet sich der Riegel in seiner Verriegelposition, ist so eine Art Nase an dem Riegel angeordnet, so dass der Riegel leicht über die Nase betätigbar bzw. greifbar ist, da diese bezogen auf die Vertiefung über die Wandung der Hülse übersteht.

Vorteilhaft ist das andere Verbindungsteilelement z.B. als Fußelement, insbesondere mit seiner Steckseite korrespondierend zur Hülse, insbesondere zu deren Durchgangsbohrung bzw. zu deren Bohrungsabschnitten ausgeführt. Das andere Verbindungsteilelement z.B. als Fußelement ist an seiner Steckseite bevorzugt pilsförmig mit einem Pilskopf und einem Pilssteg ausgeführt, wobei der Pilssteg bezogen auf einen Anlagebereich und bezogen auf den Pilskopf in seinem Durchmesser reduziert ist. Der Pilssteg ist in Axialrichtung gesehen zwischen dem Pilskopf und dem Anlagebereich angeordnet. Gegenüberliegend zum Pilskopf weist das Fußelement einen Betätigungsbereich auf, welcher vorzugsweise mehrkantig, meist als Sechskant ausgeführt ist und somit als Schlüsselfläche genutzt werden kann.

Der Anlagebereich ist bevorzugt mit seinem Durchmesser an den zweiten Bohrungsabschnitt der Hülse angepasst, so dass ein Ringspalt zwischen dem Anlagebereich und dem ersten Bohrungsabschnitt der Hülse gebildet ist, wenn das Fußelement mit seiner Steckseite in die Hülse eingesteckt ist. In diesem Ringspalt ist die zuvor genannte Einsteckhülse angeordnet. Die Einsteckhülse weist eine Wandstärke auf, welche bevorzugt etwas größer ist als der Betrag der Stufe zwischen dem ersten und zweiten Bohrungsabschnitt. Damit kann der Analgebereich an der Einsteckhülse anliegen und zum zweiten Bohrungsabschnitt über einen Spalt beabstandet sein. Im eingesteckten Zustand greift der Anlagebereich etwas in den zweiten Bohrungsabschnitt ein, wobei der Pilskopf in Axialrichtung gesehen innerhalb des zweiten Bohrungsabschnittes angeordnet ist, also mit seiner Kopfseite axial etwas zum kegelförmigen Übergangsabschnitt beabstandet ist. Mit seinem Betätigungsbereich, bzw. mit dessen Anlagefläche liegt das Fußelement im eingesteckten Zustand bevorzugt an der entsprechenden Fläche der Fußseite an.

Zum Einstecken des einen Verbindungsteilelementes in das andere, also zum Einstecken z.B. des Fußelementes in das Halselement, ist der Riegel in seiner Entriegel- bzw. Öffnungsposition angeordnet. Ist das Fußelement in das Halselement eingesteckt, wird der Riegel in seine Verriegelposition überführt. In der Verriegelposition liegt der Riegel zum einen an einer bezogen auf seine Kopfseite gegenüberliegenden Unterseite des Pilskopfes und zum anderen an der korrespondierenden Fläche des Anlagebereiches an. Bevorzugter weise ist der Riegel in seiner Dickendimension an die Ausgestaltung des Pilssteges ausgeführt, so dass das Fußelement kraftschlüssig in dem Halselement bzw. in dessen Durchgangsbohrung über den Riegel klemmend lagesicher gehalten wird.

Zweckmäßig im Sinne der Erfindung ist, wenn in dem Betätigungsbereich gegenüberliegend zum Pilskopf eine Gewindebohrung eingebracht ist, um das Fußteil mit der wechselbaren Sternplatte hinreichend verbinden zu können, wozu in der Sternplatte an der entsprechenden Stelle eine Durchstecköffnung eingebracht ist. Auch hier kann wiederum ein Eingreifabschnitt an dem Fußelement vorgesehen sein, welcher in die Öffnung eingreift.

Insgesamt wird mit der Erfindung ein Führungselement bzw. eine Flaschenführungskurve bzw. -stern zur Verfügung gestellt, dessen Führungsteilelemente (auch als Wechselteile oder Formatteile bezeichnet), bevorzugt das wechselbare Element werkzeuglos austauschbar sind. Hierzu ist vorteilhaft vorgesehen, das eine Verbindungsteilelement als männliches und das andere Verbindungsteilelement als weibliches Element auszuführen, welche ineinander gesteckt über den Riegel bzw. Hebel hinreichend lagesicher verbindbar sind. Durch einfaches Überführen des Riegels in dessen Verriegelposition sind die ineinander gesteckten Verbindungsteilelemente kraftschlüssig miteinander verbunden. Der Ausbau der so genannten Wechselteile erfolgt in entsprechend kurzer Zeit, indem der Riegel einfach in seine Entriegel- bzw. Öffnungsposition überführt wird, und die Verbindungsteilelemente außer Eingriff gebracht werden. Durch die sehr einfache Steckverbindung mit dem umlegbaren Riegel ist also eine sehr einfache Montage der Wechselteile bereitgestellt, wodurch Stillstandszeiten der Flaschenbehandlungsmaschine sehr deutlich reduziert sind. Aber auch nach einem Crash kann so eine schnelle Schadensbehebung erreicht werden. Das erfindungsgemäße Führungselement ist sowohl zum Transport von Glasflaschen als auch von Kunststoffflaschen, z.B. PET-Flaschen geeignet.

Weitere vorteilhafte Ausgestaltungen der Erfindung sind in den Unteransprüchen und der folgenden Figurenbeschreibung offenbart. Es zeigen
Fig. 1 ein Führungselement in einer perspektivischen Ansicht,
Fig. 2 das Führungselement aus Figur in einem Längsschnitt durch ein Verbindungselement,
Fig. 3 eine Aufsicht auf das Verbindungselement aus Figur 2,
Fig. 4 das Führungselement aus Figur 1 im gelösten Zustand in einer perspektivischen Ansicht,
Fig. 5 die Darstellung aus Figur 5 als Längsschnitt, und
Fig. 6 eine Aufsicht auf ein Halselement als Einzelheit im entriegelten Zustand.

In den unterschiedlichen Figuren sind gleiche Teile stets mit denselben Bezugszeichen versehen, weswegen diese in der Regel auch nur einmal beschrieben werden.

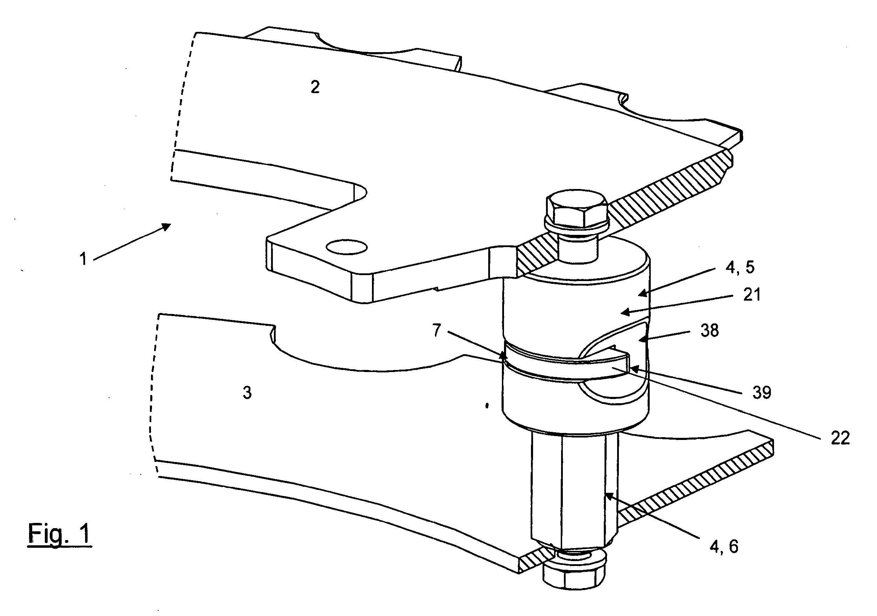

Figur 1 zeigt ein Führungselement 1, welches als Flaschenführungskurve bzw. -stern bezeichnet werden kann. Das Führungselement 1 weist Führungsteilelemente 2, 3 auf, welche im Folgenden auch als Halsführungselement 2 und auch als wechselbares Element 3 bzw. als wechselbare Sternplatte 3 bezeichnet werden. Die beiden Führungsteilelemente 2, 3 sind über zumindest ein Verbindungselement 4 miteinander verbunden. In den Figuren ist jeweils nur ein Verbindungselement 4 dargestellt. Natürlich kann eine Vielzahl von Verbindungselementen 4 vorgesehen sein.

Das Verbindungselement 4 ist aus einem ersten Verbindungsteilelement 5 und einem zweiten Verbindungsteilelement 6 gebildet. Beispielhaft ist das erste Verbindungsteilelement 5 als Halselement 5 an dem Halsführungselement 2 angeordnet, wobei das zweite Verbindungsteilelement 6 als Fußelement 6 an der wechselbaren Sternplatte 3 angeordnet ist.

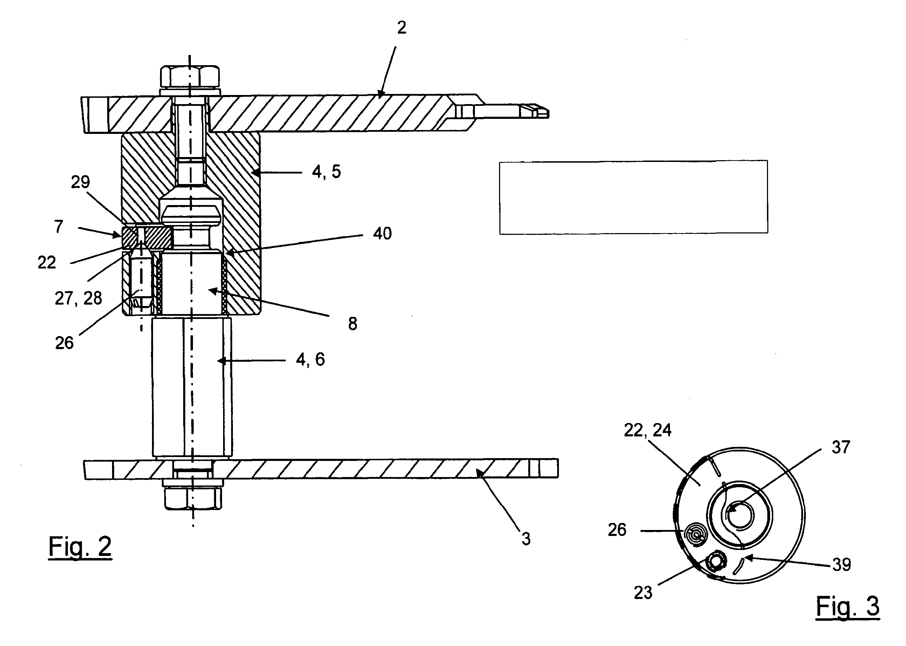

Das Halselement 5 weist eine verriegelbare Aufnahme 7 auf. In dem dargestellten Ausführungsbeispiel ist das Fußelement 6 mit seiner Steckseite 8 (Figur 2) in das Halselement 5 eingesteckt und über die verriegelbare Aufnahme 7 kraftschlüssig lagesicher gehalten, wobei die verriegelbare Aufnahme 7 verriegelt ist.

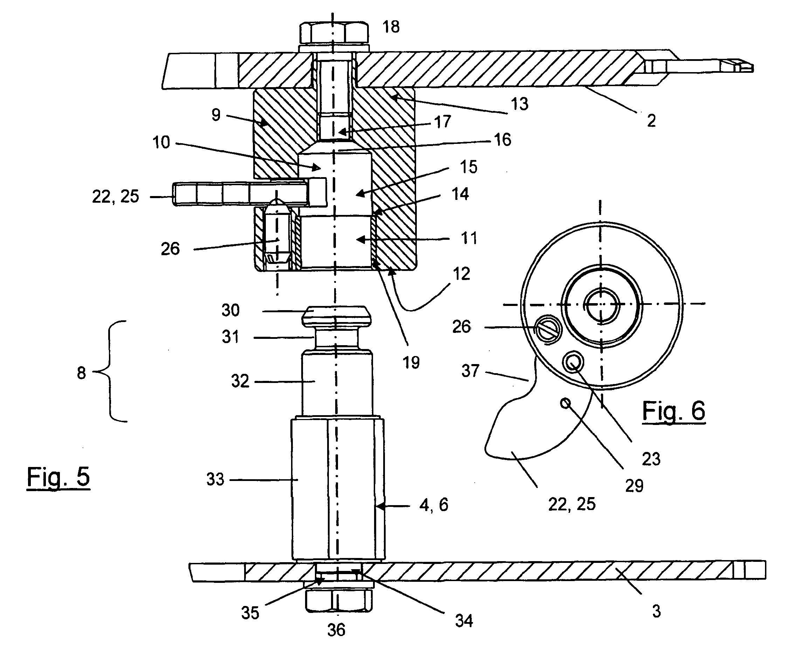

Das Halselement 5 ist in der Art einer Hülse 9 ausgeführt. In der Hülse 9 ist beispielhaft eine stufenartige Durchgangsbohrung 10 eingebracht (Figur 5). Die Durchgangsbohrung 10 weist einen ersten Bohrungsabschnitt 11 auf, welcher sich von einer Fußseite 12 der Hülse 9 in Richtung zu einer dazu gegenüberliegenden Befestigungsseite 13 erstreckt. Der erste Bohrungsabschnitt 11 ist zur Fußseite 12 geöffnet, und weist einen im Längsschnitt gesehen zylindrische Ausgestaltung auf. Der erste Bohrungsabschnitt 11 geht über eine Stufe 14 in einen zweiten Bohrungsabschnitt 15 über, welcher bezogen auf den ersten Bohrungsabschnitt 11 einen geringeren Durchmesser aufweist. Der zweite Bohrungsabschnitt 15 geht über einen kegelförmig sich verjüngenden Übergangsabschnitt 16 in einen dritten Bohrungsabschnitt 17 über. Der dritte Bohrungsabschnitt 17 ist in einen Eingreifstutzen des Halselementes 5 weitergeführt und mündet in der Zeichnungsebene oberhalb der Befestigungsseite 13. In dem dritten Bohrungsabschnitt 17 ist ein Innengewinde zur Aufnahme einer Befestigungsschraube 18 angeordnet. Mittels der Befestigungsschraube 18 ist das Halselement 5 mit dem Halsführungselement 2 verbindbar.

Wie in Figur 5 erkennbar, ist in dem ersten Bohrungsabschnitt 11 eine Einsteckhülse 19 angeordnet, welche eine derartige Wandstärke aufweist, dass die Einsteckhülse 19 mit ihrer Innenwand die Stufe 14 in Radialrichtung überragt. Die Stufe 14 kann somit auch als Anschlag bezeichnet werden.

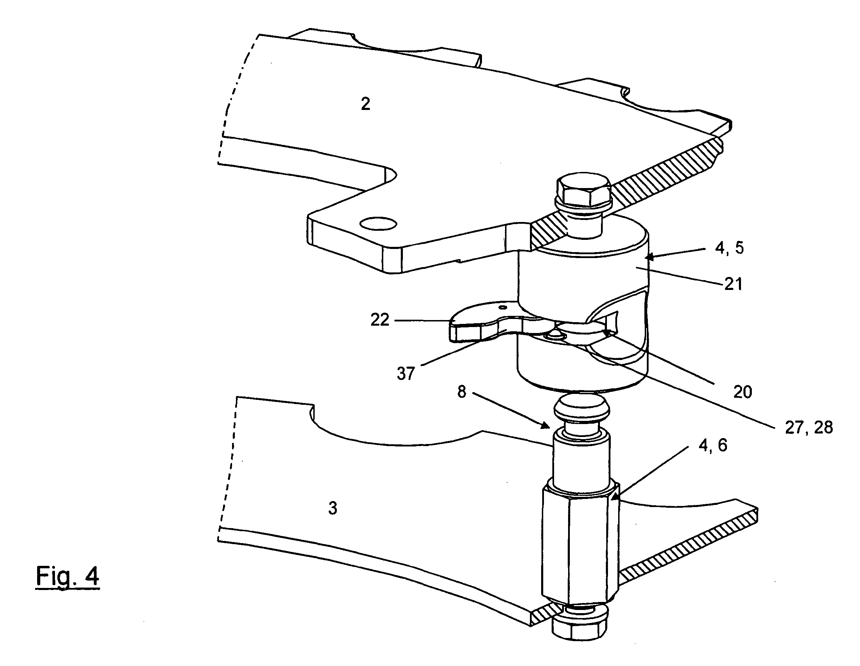

Wie der Figur 4 zu entnehmen ist, ist im Bereich des zweiten Bohrungsabschnittes 15 der Hülse 9 ein Schlitz 20 eingebracht. Der Schlitz 20 ist in der Art einer Sekante in der Wandung 21 der Hülse 9 angeordnet. In dem Schlitz 20 ist ein Riegel 22 angeordnet. Der Riegel 22 ist über eine Drehachse 23 (Figur 6) schwenkbar in dem Schlitz 20 gelagert. Über die Drehachse 23 ist der Riegel 22 in eine Verriegelposition 24 (Figur 3) und eine Öffnungsposition oder Entriegelposition 25 (Figur 6) und zurück bewegbar bzw. schwenkbar.

Die verriegelbare Aufnahme 7 ist vorteilhaft also aus der Bohrung 10 bzw. aus der Durchgangsbohrung 10 und dem in dem Schlitz 20 schwenkbar gelagerten Riegel 22 gebildet.

In der Hülsenwand 21 ist zudem ein Festlegelement 26 angeordnet, welches mit seiner Eingreifseite 27 in den Schlitz 20 hineingreift (Figur 4). Das Festlegelement 26 kann als Federelement bzw. -stift ausgeführt sein, welches an seiner Eingreifseite 27 eine Eingreifkugel 28 aufweist. Korrespondierend zur Eingreifkugel 28 weist der Riegel 22 eine Durchgangsbohrung 29 auf, worauf weiter unten näher eingegangen wird.

Das Fußelement 6 weist in dem beispielhaften Ausführungsbeispiel an seiner Einsteckseite 8 eine pilsförmige Ausgestaltung mit einem Pilskopf 30 und einem Pilssteg 31 auf. Der Pilssteg 31 weist bezogen auf einen Anlagebereich 32 der Einsteckseite 8 einen geringeren Durchmesser auf. Der Pilssteg 31 ist in Axialrichtung des Fußelementes 6 gesehen zwischen dem Pilskopf 30 und dem Anlagebereich 32 angeordnet.

Gegenüberliegend zum Pilskopf 30 weist das Fußelement 6 einen Betätigungsbereich 33 auf, welcher beispielhaft als Sechskant ausgeführt ist. Der Betätigungsbereich 33 weist gegenüberliegend zum Pilskopf 30 einen Eingreifabschnitt 34 auf, welcher bezogen auf den Betätigungsbereich 33 im Durchmesser reduziert ist. Mit dem Eingreifabschnitt 34 greift das Fußelement 6 in eine in der wechselbaren Sternplatte 3 eingebrachten Bohrung 35 ein. In dem Eingreifabschnitt 34 ist eine Gewindebohrung eingebracht, in welche eine Befestigungsschraube 36 eindrehbar ist, so dass die wechselbare Sternplatte 3 hinreichend mit dem Fußelement 6 verbindbar ist.

Der Riegel 22 weist wie beispielhaft dargestellt, eine an die Dimension des Pilssteges 31 angepasste Ausgestaltung aus. Hierbei ist bevorzugt die Dicke des Riegels 22 so ausgeführt, dass der Riegel 22 in seiner Verriegelposition 24 zum einen an einer in der Zeichnungsebene dargestellten Unterseite des Pilskopfes 30 und zum anderen an einer in der Zeichnungsebene angeordneten Oberseite des Anlagebereiches 32 anliegen kann, wie z.B. Figur 2 zeigt.

In dem beispielhaften Ausführungsbeispiel weist der Riegel 22 eine bezogen auf die Hochachse des Halselementes 5 gebogen verlaufende, bevorzugt konkav ausgeführte Innenseite 37 auf, welche so ausgeführt ist, dass diese in den zweiten Bohrungsabschnitt 15 eingreift, wenn der Riegel 22 in seiner Verriegelposition 24 angeordnet ist. Beispielhaft ist der Figur 3 entnehmbar, dass der Riegel 22 den zweiten Bohrungsabschnitt 15 mit seiner Innenseite 37 schneidet. Die Innenseite 37 ist bevorzugt mit einem konkav ausgeführten Mittelbereich ausgeführt, aan dem sich jeweils linear ausgeführte Randbereiche anschließen.

Wie insbesondere der Figur 1 deutlich zu entnehmen ist, ist benachbart zum Schlitz 20 eine Vertiefung 38 bzw. eine Kuhle in der Hülsenwand 21 angeordnet, so dass quasi eine Nase 39 des Riegels 22 gebildet ist, welche leicht greifbar ist. In der Aufsicht gemäß Figur 3 ist erkennbar, dass die Nase 39 nicht über den eigentlichen Außenumfang der Hülsenwand 21 übersteht, sondern nur im Bereich der Vertiefung 38, welche günstiger Weise vorgesehen ist, so dass der Riegel 22 leicht über die Nase 39 betätigbar ist, wenn der Riegel 22 in seine Öffnungsposition 25 überführt werden soll.

Ausgehend von dem getrennten Zustand der beiden Führungsteilelemente 2 und 3 (Figuren 4 und 5) wird zum Verbinden des Halsführungselementes 2 mit der wechselbaren Sternplatte 3 wie folgt vorgegangen.

Zunächst wird das Fußelement 6 mit seiner Steckseite 8 in die Durchgangsbohrung 10 des Halselementes 5 eingesteckt. Der Riegel ist dazu in die Öffnungsposition 25 geschwenkt. Mit seinem Anlagebereich 32 liegt das Fußelement dabei zum einen an der Einsteckhülse 19 an und greift etwas in den zweiten Bohrungsabschnitt 15 ein. Der Anlagebereich 32 ist mit seinem Außenumfang etwas zum zweiten Bohrungsabschnitt 15 beabstandet, so dass ein Ringspalt 40 gebildet ist. Der Pilssteg 31 und der Pilskopf 30 erstrecken sich vollständig in den zweiten Bohrungsabschnitt 15. Mit seiner Kopfseite ist der Pilskopf 30 bezogen auf die Zeichnungsebene in Hochrichtung gesehen zum kegelförmigen Übergangsabschnitt 16 beabstandet in dem zweiten Bohrungsabschnitt 15 aufgenommen. Ist das Fußelement 6 mit seiner Steckseite 8 in das Halselement 5 eingesteckt, wird der Riegel 22 in seine Verriegelposition 24 überführt. Hierbei gelangt der Riegel 22 in Kontakt mit der Eingreifkugel 28 und lenkt diese entgegen der Federkraft in der dargestellten Zeichnungsebene nach unten aus, bis die Durchgangsbohrung 29 axial über der Eingreifkugel 28 angeordnet ist. Dabei wird die Eingreifkugel 28 federkraftbedingt in Richtung zu ihrer entspannten Position überführt, liegt aber federkraftbedingt an der entsprechenden Seite des Riegels 22 an. Der Kontakt der Eingreifkugel 28 mit dem Riegel 22 bzw. das bereichsweise Einlegen der Eingreifkugel 28 in die Durchgangsbohrung 29 ist in bevorzugter Ausführung akustisch wahrnehmbar.

Das Fußelement 6 ist so mit dem Halselement 5 hinreichend lagesicher verbunden. Somit sind auch das Halsführungselement 2 und die wechselbare Sternplatte 3 miteinander verbunden. Zum Wechsel der wechselbaren Sternplatte 3 muss nur noch der jeweilige Riegel 22 aus seiner Verriegelposition 24 in seine Entriegel- bzw. Öffnungsposition 25 überführt werden, so dass das Fußelement 6 durch diese Freigabe leicht aus dem Halselement 6 entfernt werden kann. Eine an die neuen Gegebenheiten angepasste, wechselbare Sternplatte 3 kann nun in einfacher und zeitsparender Weise mit dem Halsführungselement 2 verbunden werden.

In dem dargestellten Ausführungsbeispiel gemäß den Figuren 1 bis 6 ist jeweils ein einstückiges Halselement 5 bzw. Fußelement 6 dargestellt. Möglich ist natürlich ein jeweils mehrstückiges Verbindungsteilelement 5 oder 6 vorzusehen. Insbesondere das Fußelement 6 kann dabei mehrstückig, vorzugsweise zweistückig ausgeführt sein. Denkbar ist, die Einsteckseite 8 als separates Element zum Betätigungsbereich 33 auszuführen, welche zum Beispiel über eine Schraubverbindung vormontiert werden können. Dies ist dahingehend vorteilhaft, als die Steckseite 8 mit ihrer an die Durchgangsbohrung 10 des Halselementes 5 angepasste Ausgestaltung universell mit unterschiedlich ausgeführten Betätigungsbereiche 33 verbindbar sein kann. So können insbesondere in ihrer axialen Erstreckung unterschiedlich ausgeführte Betätigungsbereiche 33 mit der universellen Einsteckseite 8 verbunden werden. Dies reduziert die Lagerhaltungskosten erheblich. Zudem können die unterschiedlichen Bauelemente an die jeweilige Flaschendimension angepasst vormontiert werden um dann bei einem sehr kurzen Anlagenstillstand einen Wechsel der Formatteile bzw. der wechselbaren Sternplatte 3 durchzuführen, da eine einfache, verriegelbare Steckverbindung zur Verfügung steht. Aber nicht nur der in Hochrichtung gesehen axiale Abstand kann so angepasst werden, auch kann eine jeweils an unterschiedliche Flaschendurchmesser angepasste Sternplatte so in sehr kurzerer Zeit gewechselt werden. Auch hierzu können die einzelnen an die jeweilige Flaschenserie angepassten Bauelemente vor dem eigentlichen Anlagenstillstand vormontiert werden.

### Bezugszeichenliste

- 1: Führungselement bzw. Flaschenführungskurve
- 2: Führungsteilelement bzw. Halsführungselement
- 3: Führungsteilelement bzw. wechselbare Sternplatte
- 4: Verbindungselement
- 5: Erstes Verbindungsteilelement bzw. Halselement
- 6: Zweites Verbindungsteilelement bzw. Fußelement
- 7: Verriegelbare Aufnahme
- 8: Steckseite von 6
- 9: Hülse
- 10: Durchgangsbohrung
- 11: Erster Bohrungsabschnitt
- 12: Fußseite
- 13: Befestigungsseite
- 14: Stufe
- 15: Zweiter Bohrungsabschnitt
- 16: Übergangsbereich
- 17: Dritter Bohrungsabschnitt
- 18: Befestigungsschraube an 2
- 19: Einsteckhülse
- 20: Schlitz
- 21: Wandung von 9
- 22: Riegel
- 23: Drehachse
- 24: Verriegelposition
- 25: Entriegelposition
- 26: Festlegeelement
- 27: Eingreifseite
- 28: Eingreifkugel
- 29: Durchgangsbohrung in 22
- 30: Pilskopf
- 31: Pilssteg
- 32: Anlagebereich
- 33: Betätigungsbereich
- 34: Eingreifabschnitt
- 35: Bohrung
- 36: Befestigungsschraube an 3
- 37: Innenseite von 22
- 38: Vertiefung
- 39: Nase
- 40: Ringspalt zwischen 32 und 15

## Patentansprüche

1. Führungselement für Behälter, Flaschen und dergleichen, das Führungsteilelemente (2,3) aufweist, welche über zumindest ein Verbindungselement (4) miteinander verbindbar sind, wobei das zumindest eine Verbindungselement (4) ein erstes Verbindungsteilelement (5) und ein zweites Verbindungsteilelement (6) aufweist, wobei die Verbindungsteilelemente (5,6) miteinander kraftschlüssig verriegelbar sind, und wobei eines der beiden Verbindungsteilelemente (5,6) eine verriegelbare Aufnahme (7) aufweist, in welche das andere Verbindungsteilelement (5, 6) mit seiner an die Aufnahme (7) korrespondierend ausgeführten Steckseite (8) einsteckbar ist, so dass das erste Verbindungsteilelement (5) in unverriegeltem Zustand durch das zweite Verbindungsteilelement (6) lagesicher gehalten und getragen wird und ein Verbindungsteilelement (5, 6) an dem anderen Verrbindungsteilelement (5,6) formschlüssig lagesicher gehalten ist, wenn die verriegelbare Aufnahme (7) verriegelt ist,
**dadurch gekennzeichnet dass**
das erste Verbindungselement (5) als Halselement eine stufenartige Bohrung (10) aufweist, welche einen ersten Bohrungsabschnitt (11) aufweist, der mit einer Stufe (14) in einen zweiten Bohrungsabschnitt (15) übergeht, wobei in dem ersten Verbindungsteilelement (5) als Halselement ein Schlitz (20) eingebracht ist, welcher dessen zweiten Bohrungsabschnitt (15) öffnet, wobei das Verbindungsteilelement (5) als Halselement einen Riegel (22) aufweist, welcher um eine Drehachse (23) aus einer Entriegelposition (25) in eine Verriegelposition (24) bewegbar ist, wobei der Riegel (22) in einem Schlitz (20) gelagert ist, welcher in dem Halselement sekantenartig eingebracht ist.

2. Führungselement nach Anspruch 1, **dadurch gekennzeichnet, dass** das eine Verbindungsteilelement (5) als Halselement an einem als Halsführungselement (2) ausgeführten Führungsteilelement (2) angeordnet ist, wobei das andere Verbindungsteilelement (6) als Fußelement an dem anderen Führungsteilelement (3) angeordnet ist, welches als wechselbares Element ausgeführt ist.

3. Führungselement nach einem der vorhergehenden Ansprüche, **dadurch gekennzeichnet, dass** das Verbindungsteilelement (5) als Halselement in der Art einer Hülse (9) ausgeführt ist.

4. Führungselement nach einem der vorhergehenden Ansprüche, **dadurch gekennzeichnet, dass** der zweite Bohrungsabschnitt (15) über einen kegelförmig sich verjüngenden Übergangsbereich (16) in einen dritten Bohrungsabschnitt (17) übergeht, welcher einen geringeren Durchmesser aufweist als der zweite Bohrungsabschnitt (15).

5. Führungselement nach einem der vorhergehenden Ansprüche, **dadurch gekennzeichnet, dass** das Verbindungsteilelement (5) als Halselement in seiner Wandung (21) eine Vertiefung (38) aufweist.

6. Führungselement nach einem der vorhergehenden Ansprüche, **dadurch gekennzeichnet, dass** das Verbindungsteilelement (6) als Fußelement an seiner Steckseite (8) pilsförmig mit einem Pilskopf (30) und einem Pilssteg (31) ausgeführt ist.

## Claims

1. Guide element for containers, bottles and the like, which comprises partial guide elements (2, 3) that can be interconnected by at least one connecting element (4), wherein the at least one connecting element (4) comprises a first partial connecting element (5) and a second partial connecting element (6), wherein the partial connecting elements (5, 6) can be locked together in nonpositive fit, and wherein one of the two partial connecting elements (5, 8) comprises a lockable receptacle (7) into which the insertion side (8) of the other partial connecting element (5, 6) corresponding to the receptacle (7) can be inserted, so that the first partial connecting element (5) in the unlocked state can be locationally securely retained and carried by the second partial connecting element (6), and one partial connecting element (5, 6) is locationally securely retained at the other partial connecting element (5, 6) in a force-fit manner when the lockable receptacle (7) is locked,
**characterised in that**
the first connecting element (5) comprises as a neck element a stepped borehole (10) which comprises a first borehole section (11), which passes into a second borehole section (15) by means of a step (14), wherein, in the first partial connecting element (5), as the neck element, a slot (20) is located, which opens its second borehole section (15), wherein the partial connecting element (5) comprises as a neck element a bar (22), which is movable about an axis of rotation (23) out of an unlocked position (25) into a locked position (24), wherein the bar (22) is mounted in a slot (20) which is located in a secant manner in the neck element.

2. Guide element according to claim 1, **characterised in that** the one partial connecting element (5) is arranged as a neck element on a partial guide element (2) as a neck guide element (2), wherein the other partial connecting element (6) is arranged as a foot element at the other partial guide element (3), which is designed as a replaceable element.

3. Guide element according to any one of the preceding claims, **characterised in that** the partial connecting element (5) is designed as a neck element in the form of a sleeve (9).

4. Guide element according to any one of the preceding claims, **characterised in that** the second borehole section (15) passes by way of a transition section (16), which tapers in a conical manner, into a third borehole section (17) which exhibits a smaller diameter than the second borehole section (15),

5. Guide element according to any one of the preceding claims, **characterised in that** the partial connecting element (5) exhibits an indentation (38) as a neck element in its wall (21).

6. Guide element according to any one of the preceding claims, **characterised in that** the partial connecting element (6) is designed as a foot element on its insertion side (8) in mushroom shape, with a mushroom head (30) and a mushroom stem (31).

## Revendications

1. Elément de guidage pour récipients, bouteilles ou similaires, lequel présente des éléments partiels de guidage (2, 3), qui peuvent être reliés les uns aux autres par l'intermédiaire au moins d'un élément de liaison (4), sachant que l'élément de liaison (4) au moins au nombre de un présente un premier élément partiel de liaison (5) et un deuxième élément partiel de liaison (6), sachant que les éléments partiels de liaison (5, 6) peuvent être verrouillés les uns aux autres à force, et sachant qu'un des deux éléments partiels de liaison (5, 6) présente un logement (7) pouvant être verrouillé, dans lequel l'autre élément partiel de liaison (5, 6) peut être inséré par son côté d'insertion (8) réalisé de manière à correspondre au logement (7) de sorte que le premier élément partiel de liaison (5) est, dans l'état non verrouillé, maintenu et supporté en position sécurisée par le deuxième élément partiel de liaison (6) et qu'un élément partiel de liaison (5, 6) est maintenu en position sécurisée par complémentarité de forme au niveau de l'autre élément partiel de liaison (5, 6) lorsque le logement (7) pouvant être verrouillé est verrouillé,
**caractérisé en ce**
**que** le premier élément de liaison (5) présente, en tant qu'élément formant la partie supérieure, un alésage graduel (10) qui présente une première section d'alésage (11), qui se transforme, avec un palier (14), en une deuxième section d'alésage (15), sachant qu'une entaille (20) est pratiquée, comme élément formant la partie supérieure, dans le premier élément partiel de liaison (5), laquelle entaille ouvre la deuxième section d'alésage (15) dudit élément partiel de liaison, sachant que l'élément partiel de liaison (5) présente, comme élément formant la partie supérieure, un verrou (22), qui peut être déplacé autour d'un axe de rotation (23) depuis une position déverrouillée (25) dans une position verrouillée (24), sachant que le verrou (22) est logé dans une entaille (20) qui est pratiquée dans l'élément formant la partie supérieure à la manière d'une sécante.

2. Elément de guidage selon la revendication 1, **caractérisé en ce que** l'un des éléments partiels de liaison (5) est disposé, en tant qu'élément formant la partie supérieure, au niveau d'un élément partiel de guidage (2) réalisé sous la forme d'un élément de guidage supérieur (2), sachant que l'autre élément partiel de liaison (6) est disposé en tant qu'élément formant la partie inférieure au niveau de l'autre élément partiel de guidage (3), qui est réalisé sous la forme d'un élément pouvant être changé.

3. Elément de guidage selon l'une quelconque des revendications précédentes, **caractérisé en ce que** l'élément partiel de liaison (5) est réalisé sous la forme d'un élément formant la partie supérieure à la manière d'un manchon (9).

4. Elément de guidage selon l'une quelconque des revendications précédentes, **caractérisé en ce que** la deuxième section d'alésage (15) se transforme en une troisième section d'alésage (17) en passant par une zone de transition (16) se rétrécissant à la manière d'un cône, laquelle troisième section d'alésage présente un diamètre de plus petite taille que celui de la deuxième section d'alésage (15).

5. Elément de guidage selon l'une quelconque des revendications précédentes, **caractérisé en ce que** l'élément partiel de liaison (5) présente, en tant qu'élément formant la partie supérieure, dans sa paroi (21), un évidement (38).

6. Elément de guidage selon l'une quelconque des revendications précédentes, **caractérisé en ce que** l'élément partiel de liaison (6) est réalisé en tant qu'élément formant la partie inférieure, au niveau de son côté d'insertion (8), de manière à présenter une forme de champignon avec un chapeau de champignon (30) et un pied de champignon (31).
